# EUROPEAN PATENT APPLICATION

(11) **EP 3 587 720 A1**
(43) Date of publication of application: **01.01.2020**
(21) Application number: 19182399.6
(22) Date of filing: 25.06.2019
(51) Int. Cl.: E06B 1/34, F16B 5/06, E06B 3/984

(54) **REVEAL FINISHING ASSEMBLY AND METHOD FOR FINISHING A REVEAL WITH REVEAL PANELS**

(30) Priority: 26.06.2018 NL 2021183
(71) Applicant: Wood-Products B.V., 7137 HB Lievelde (NL)
(72) Inventor: NIENHUIS, Marcel Hendrikus Maria, 7137 HB LIEVELDE (NL)
(74) Representative: EP&C

(57) **Abstract**

Reveal finishing assembly 1 for finishing a reveal in a wall with a first and second reveal panel 21, 22 provided with dovetail grooves 211, 221 and a reveal clip 3. The reveal clip 3 is configured for joining together the first and second reveal panels 21, 22 at right angles. The reveal clip 3 has a first and a second clip arm 31, 32, each of which is provided with a clamping member 33 for generating a clamping force with the first and the second clamping part 331, 332. A slanting vertical clamping-part wall provides interlocking of the clamping member with a dovetail groove 211, 221. The clamping-part wall is provided with a tooth 336 with a tooth point that is active in a longitudinal direction of the clip arm and is directed towards the square internal angle, so that pushing-out of the clamping member 33 from the dovetail groove 211 is counteracted by the tooth gripping action.

## Description

The present invention relates to a reveal finishing assembly and method for finishing a reveal.

After fitting or renovating a frame, the so-called reveal must be finished. The frame is fitted in an opening in the wall. As defined in Wikipedia, the reveal, also called jamb or outer reveal, refers to an inner surface of a material that encloses the opening. The size of the reveal, the internal dimensions or the distance between opposite reveals is called the "measure in the clear" or "clear width". A "brick clear width" refers to a distance between opposite sides of brickwork. A "frame clear width" refers to a distance between opposite sides within a frame. A measure in the clear of a glazing opening refers to a distance between opposite sides of a frame within which glass is fitted.

FR2996610 discloses a method for manufacturing and installing a reveal finishing assembly. The assembly comprises a first and a second reveal panel, which in the longitudinal direction are provided with a dovetail groove. The dovetail groove has an open groove end on an end face of the reveal panel. The first reveal panel can be coupled to the second reveal panel by means of a mounting bracket. The mounting bracket has two arms positioned at right angles to one another, each provided with a hole and an elongated male connecting element. The connecting element is configured to be pushed into the dovetail groove during assembly. A longitudinal groove is provided on a lower face of the dovetail groove and on an upper face of the connecting element. In an assembled state, these longitudinal grooves extend in the extension of the hole in the opposite arm of the mounting bracket. To fix the first and the second reveal panel, a screw is passed through the hole through the longitudinal grooves. By fitting the screw, the connecting element of the mounting bracket is locked in the dovetail groove and a tight joint is obtained.

Unfortunately, in practice this reveal finishing assembly leaves something to be desired. One problem is that in some cases, after fitting, the end faces of the reveal panels are still seen to deviate from one another, and a gap is formed.

A door frame assembly and a method of installation thereof are known from US6,393,779, wherein the use of external fastening materials is not required. A strip-shaped angle profile is provided for mounting a first reveal panel, which is fitted against a reveal, and then a wall panel that is fitted at right angles to the first reveal panel already fitted, in order to cover a wall. In a first step of a method for finishing a reveal, the angle profile is fastened in the corner around the opening. In a subsequent step, reveal panels and wall panels are pressed on the angle profile.

The angle profile is L-shaped and provided with two vertical walls on each of the legs of the angle profile. The vertical walls extend over the whole length of the angle profile. The vertical walls are provided with teeth. The teeth are configured for gripping on an internal wall in a groove of rectangular cross-section in an underside of the reveal panel or wall panel, respectively. The teeth are oriented in such a way that once a panel has been pressed on, it can no longer be detached from a reveal. The teeth prevent movement of the panel in a perpendicular direction from the reveal or the wall.

A clamping plate is known from US9194173 for mounting wall panels against a wall to obtain a decorative finish around an opening. The clamping plate has a U-shaped cross-section. On both sides, the clamping plate has vertical edges that are provided with teeth. A wall panel to be fitted is provided on an underside with two grooves of rectangular cross-section, which extend in a longitudinal direction of the wall panel. The positioning of the grooves corresponds to the vertical edges of the clamping plate. The clamping plate is provided with a number of bolt holes. When fitting the wall panels around an opening against a wall, in a first step several clamping plates are fastened around the opening using screws. Then the wall panels are pressed onto the clamping plates. The teeth on the vertical edges of the clamping plates then grip onto an internal wall of the grooves. The gripping action prevents the wall plates coming loose. The gripping action of the teeth prevents movement of a wall panel in a direction from off the wall.

A drawback of this assembly of a strip-shaped angle profile or these clamping plates with associated reveal panels and wall panels is that after fitting, often gaps appear to be present or actually do form between adjacent wall panels. These gaps make further finishing necessary.

The aim of the present invention is to overcome at least one of the aforementioned drawbacks at least partially, or to provide a usable alternative. A particular aim of the invention is to provide a reveal finishing assembly and method for the fitting thereof, wherein the reveal-finishing system can be applied quickly and accurately and wherein the possible development of gaps is minimized.

This aim is achieved with a reveal finishing assembly according to Claim 1.

According to the invention, a reveal finishing assembly is provided for finishing a reveal in a wall.

The reveal finishing assembly comprises a first and a second reveal panel. The first and the second reveal panel have a reveal end portion that is provided with a dovetail groove extending in a longitudinal direction. The dovetail groove has an open groove end on an end face of the reveal panel.

The reveal finishing assembly further comprises a reveal clip. The reveal clip is arranged for fitting against an external angle of an assembly of the first reveal panel that is positioned substantially at right angles to the second reveal panel.

The reveal clip has a V-shaped clip body. The clip body forms a right angle. The clip body has a first clip arm and a second clip arm at right angle thereto. Each clip arm comprises a clamping member. The clamping members are located in the corner. The clamping member has a first clamping part that extends in the longitudinal direction of the clip arm parallel to a second clamping part. The clamping member is configured to clamp with a clamping force in a dovetail groove. In a working state, the first clamping part is spaced apart at a distance from the second clamping part. A space is provided between the first and the second clamping part. In other words, the first clamping part is disposed so that it is free and separate from the second clamping part, in such a way that the first clamping part is movable independently of the second clamping part. The first and second clamping parts determine an external width of the clamping member. This external width of the clamping member is greater than an internal width of the associated dovetail groove. The first and second clamping parts will move towards one another during fitting in the dovetail groove. Owing to this configuration, the clamping member is active under a certain clamping force during fitting of the reveal clip. At least one of the clamping parts comprises an outer vertical clamping-part wall, oriented slanting relative to the clip arm. The clamping-part wall is provided with at least one tooth for gripping on a groove wall of the dovetail groove of a reveal panel. The tooth gripping action of the at least one tooth is oriented in the longitudinal direction of the clip arm. The tooth gripping action is active in the longitudinal direction of the clip arm. The tooth has a tooth point, pointing in a direction towards the right angle of the clip body. Through this orientation of the tooth, pushing-out of the clamping member from a dovetail groove of a reveal panel is counteracted.

The clamping member with two clamping parts located opposite each other at a distance and with a width greater than the width of an associated dovetail groove is advantageous because owing to this configuration the clamping member by definition grips with a lateral clamping force on an internal wall of the dovetail groove. The external width of the clamping member is greater than the internal width of the dovetail groove, so that the clamping parts move towards one another during fitting in the dovetail groove. The presence of a spring force ensures a required tooth gripping action. Owing to the spring force that is present, the at least one tooth is pressed into the wall of the dovetail groove, giving a secure connection of the reveal clip with a reveal panel.

Compared to the known mounting bracket from FR2996610, the reveal clip according to the invention is advantageous because additional locking means, such as a nail or a screw, are no longer required. In the known mounting bracket from FR2996610, driving the screw into the connecting element results in widening of said connecting element. After widening of the connecting element, the mounting bracket is then fixed. According to the invention, instead of a connecting element of that kind, a clamping member is provided that in itself has a clamping action. The clamping action is obtained owing to the configuration of the clamping member. The clamping member is made wider than an associated dovetail groove, so that a lateral spring force arises when the clamping member is pushed into the groove. In other words, the clamping member is over-dimensioned relative to an associated dovetail groove. In particular, the clamping member is at least 1 mm wider, more particularly 2 mm wider than the associated dovetail groove. Owing to the lateral spring force, the at least one tooth is pressed into a wall of the dovetail groove. Owing to the clamping force provided, advantageously according to the invention, additional locking means are no longer required. It is seen in practice that additional means are sometimes forgotten by a tradesman, so that installation is not carried out correctly, and gaps still arise in the reveal finishing. Because the driving-in of a locking means is not necessary for fitting the reveal finishing assembly according to the invention, there is no longer any risk of gaps arising through forgetting a driving-in means after fitting.

The design of the clamping member in combination with the dovetail groove is advantageous because owing to the slanting vertical clamping-part wall, detachment of a reveal panel is prevented, whereas also owing to the orientation of the tooth, preferably configured as a sawtooth, displacement of the reveal panel in a longitudinal direction is guaranteed. Through counteracting displacement of a reveal panel, the development of gaps is counteracted. Accordingly, the clamping member prevents both detachment and displacement of a reveal panel.

However, another important advantage is that the reveal finishing assembly can be pre-assembled by applying the reveal clip outside the opening. The reveal finishing assembly can be assembled beforehand at another workplace. Attendance on a building site for finishing reveals can thus be minimized. In some cases an attendance of two days can be reduced to an attendance of one day. The duration of a building project can be accelerated considerably as a result. On site, the pre-assembled reveal finishing assembly can be fitted quickly in the opening in the wall. The reveal clip according to the invention absorbs forces that could be provided in operation of the assembly for displacement of the reveal panels. Owing to the reveal clip, the assembly remains in the pre-assembled state during operation. The reveal finishing assembly can be fastened in the opening for example by means of glazier's putty or polyurethane foam. This gives a considerable advantage, contributing to rapid fitting of a reveal finishing on site.

In one embodiment of the reveal finishing assembly according to the invention, the reveal clip is designed as an injection moulding. The clamping member is formed by the first and second clamping parts. The clamping member has a foot that is provided with a tapering. The tapering refers to a narrowing at the foot of the clamping member. The tapering extends in the longitudinal direction of the clamping member. Preferably the tapering extends over the whole length of the foot. At least one of the two clamping parts is provided with a tapering. Preferably both the first and the second clamping part have a foot that is provided with a tapering. Owing to the tapering at the foot of the clamping part, the clamping part is movable, and in particular is hinged. The at least one tooth is located in the region above the tapering of the clamping member. The tapering provides a predetermined clamping force of the clamping member. When the clamping member is pushed into an associated dovetail groove, the predetermined clamping force provides a secure tooth gripping action in a wall of the dovetail groove. In addition, the tapering enables a user to push the clamping member sufficiently easily into the dovetail groove. Preferably the clamping member is further provided with a starting edge, a chamfered side, so that the clamping member can be pushed well into the dovetail groove by the user. As a result, fitting of the reveal clip according to the invention can be carried out even better, there is a greater guarantee of secure fitting, and the risk of formation of gaps is further minimized.

In one embodiment of the reveal finishing assembly according to the invention, the tooth of the reveal clip is provided in an outer contour of the clamping-part wall. The tooth refers to a projection that is located on a plane formed by the clamping-part wall. Owing to the slanting orientation of the clamping-part wall, the tooth is pressed into the slanting groove wall of the dovetail groove. Advantageously, pushing-out of the clamping member from a reveal panel can be effectively counteracted hereby.

In one embodiment of the reveal finishing assembly according to the invention, the tooth of the reveal clip is provided on an outer contour of the clamping-part wall. The tooth is provided on an edge of the at least one clamping part. The tooth can thus grip on a lower wall of the dovetail groove. Pushing-out of the clamping member from the dovetail groove can be effectively counteracted hereby. Effective transmission of force between the reveal clip and the reveal panel takes place through a plane formed by the clamping-part wall, so that a large resistance may be obtained compared to transmission of force that exerts a gripping action outside the plane of the clamping part. In addition, this feature gives a reveal clip that is easy to manufacture.

In one embodiment of the reveal finishing assembly according to the invention, the reveal clip is a punched product. The reveal clip is to be manufactured by means of at least one punching operation. The punching operation means that a design is punched from sheet material by means of a punch. After the punching operation, the reveal clip can be obtained by subsequent bending operations. The reveal clip may be formed in one processing step, wherein cutting out and flanging take place for forming the reveal clip.

In one embodiment of the reveal finishing assembly according to the invention, the reveal clip has a plate-shaped clip body. In a bending operation the clip body can become V-shaped with the corner and the first and second clip arm. The clamping member may be formed by flanging of a sheet part. The flanged sheet part forms a first clamping part. Another flanged sheet part forms a second clamping part.

On one edge of the sheet part, already at least one tooth may be provided by a cutting operation, for example the punching operation. In one embodiment a tooth may be formed by flanging of a wall part of the clamping part. In particular, the wall part to be flanged for forming at least one tooth may be located in an outer contour of the clamping-part wall. Manufacture of the reveal clip from sheet material by means of a cutting and bending operation contributes to a simple production process and a low cost price of the reveal clip.

In one embodiment of the reveal finishing assembly according to the invention, the tooth has a sawtooth shape. A sawtooth has the property that the saw can be moved without much resistance in a first direction, whereas there is a relatively large resistance in the opposite direction, giving the sawing action. Preferably the tooth has a tooth chamfer and a square edge. The tooth chamfer and the square edge form the tooth point. A bisector between the tooth chamfer and the square edge defines a direction of the tooth point and therefore a gripping direction of the tooth. Viewed in the longitudinal direction of the clip arm, the tooth point points inwards to the right angle of the clip body. The tooth chamfer allows the clamping member to be pushed into the dovetail groove with little resistance, whereas the substantially square edge causes high resistance to pushing-out of the clamping member. A substantially square edge means that the edge, such as with a sawtooth, is nearly square, for example deviating by at most 10° from a normal to a surface being gripped.

In one embodiment of the reveal finishing assembly according to the invention, the slanting vertical clamping-part wall is oriented with a slant at an angle of at least 10° relative to a normal to the clip arm. The corner of the clamping-part wall corresponds to a slanting groove wall of the dovetail groove. Usually a dovetail groove has a slanting groove wall of at least 10°, for example manufactured with a dovetail milling cutter with an angle of 14°. To achieve a sufficiently strong gripping action on the slanting groove wall, the slanting clamping-part wall has an angle of at least 10°.

In one embodiment of the reveal finishing assembly according to the invention, each clamping part has an outer vertical clamping-part wall oriented slanting relative to the clip arm. Advantageously, each clamping part therefore contributes to the generation of a resistance when a force is exerted on a reveal panel in a direction away from a reveal. Each clamping part contributes thereby to a resistance against detachment of a reveal panel. A reveal panel can thus be fitted sturdily.

In one embodiment of the reveal finishing assembly according to the invention, the clamping member is positioned on an inner side of the clip body. The clamping member is located within the right angle formed by the clip arms. The reveal clip is thus configured for being placed over an external angle of reveal panels positioned at right angles to each other. This embodiment is advantageous in that the reveal clip is positioned in the finishing between a reveal panel and the reveal, so that the reveal clip is not visible on the outside.

In an alternative embodiment of the reveal finishing assembly according to the invention, the clamping member is positioned on an outer side of the clip body. Accordingly, the first and second reveal panels are provided with a dovetail groove on an upper side. The reveal clip is thus configured for being fitted in an internal angle between reveal panels positioned at right angles to each other.

Thus, in one embodiment the reveal clip may be fitted over an external angle, and in another embodiment within an internal angle of reveal panels positioned at right angles to each other. If the reveal clip is placed over an external angle, this is advantageous, because the reveal clip can therefore be finished invisibly, as the reveal clip is covered by the reveal panels.

In one embodiment of the reveal finishing assembly according to the invention, the reveal panel has two parallel dovetail grooves on an underside. In an assembled state of two such reveal panels at right angles to each other, two reveal clips may be used to fasten the reveal panels together. Two reveal clips are then provided on the external angle. Advantageously, this results in a robust reveal finishing assembly that can be pre-assembled in a preparatory phase and possesses sufficient rigidity for any required handling of the reveal finishing assembly. Later, on site, the pre-assembled assembly can quickly be fitted in the opening.

In one embodiment of the reveal finishing assembly according to the invention, the dovetail groove extends over at most a length of 30 cm, in particular at most 20 cm, over an end portion of the reveal. Relative to a dovetail groove that extends over an entire length of a reveal panel, a limited length makes a contribution to a duration in the manufacturing process without loss of functionality.

In one embodiment of the reveal finishing assembly according to the invention, the reveal panel may relate to a flat panel or a corner panel. The flat reveal panel may be used for covering an inner side that forms the reveal. The corner panel may be used for covering, besides the reveal itself, also a portion of an adjacent surface of the wall. Preferably the corner panel relates to an integrated reveal panel with wall panel.

In one embodiment of the reveal finishing assembly according to the invention, the reveal finishing assembly further comprises a window panel. The window panel has a window end portion that is provided with a dovetail groove extending in a longitudinal direction. The dovetail groove has an open groove end on an end face of the window panel. By means of this, the window panel can be coupled in an identical manner to a reveal panel with a reveal clip, as described above. Advantageously, a complete finishing assembly can be pre-assembled with a first, second and third reveal panel combined with the window panel. Advantageously, the pre-assembled finishing assembly may be fitted directly in an opening in the wall. In this way the necessary activities for finishing a window opening can be simplified considerably.

Furthermore, the invention relates to a reveal clip for application in a reveal finishing assembly as described above. The reveal clip serves for forming an installed state of the reveal finishing assembly. At least one reveal clip is placed on an external angle for fastening reveal panels positioned at right angles to each other. Clamping members are inserted in the dovetail grooves, after which the clip arms are adjacent to the underside of the reveal panels.

Furthermore, the invention relates to a method for fitting a reveal finishing assembly in an opening in a wall for finishing a reveal. In the method, reveal panels are positioned at right angles to each other, so that an external angle is formed and they are then joined together by means of at least one reveal clip, which is positioned over the external angle.

In one embodiment of the method, the method comprises a step of fitting together reveal panels positioned at right angles to each other by means of the at least one reveal clip before the reveal panels are placed in the opening in the wall. Advantageously the reveal panels may be placed in an assembled state in the opening to cover the reveal. With this, in a simple and quick way a can

Thus, the invention provides a reveal finishing assembly and method for finishing a reveal in a wall with a first and a second reveal panel provided with dovetail grooves and a reveal clip. The reveal clip is configured for joining the first and second reveal panels together at right angles. The reveal clip has a first and a second clip arm that form a square internal angle and they are each provided with a clamping member with first and second clamping part. A slanting vertical clamping-part wall provides interlocking of the clamping member with a dovetail groove. The clamping-part wall is provided with a tooth with a tooth point that is active in a longitudinal direction of the clip arm and is directed towards the internal right angle, so that pushing-out of the clamping member from the dovetail groove is counteracted by the tooth gripping action.

The invention will be explained in more detail on the basis of the attached drawings. The drawings form a practical embodiment of the invention, and are not to be regarded as in any way limiting. Specific detailed features may also be regarded as characterizing the invention in a general sense, separately from the embodiment example, in which:
Fig. 1 shows a reveal finishing assembly with two reveal clips and two reveal panels positioned at right angles to each other;
Fig. 2 shows a perspective view of the two reveal panels positioned at right angles to each other;
Fig. 3 shows an enlarged view of the reveal panels with a dovetail groove from Fig. 2;
Fig. 4 shows a perspective view of a reveal clip according to the invention;
Fig. 5 shows an enlarged front view of the reveal clip from Fig. 4;
Fig. 6A and 6B show views of a reveal clip as a punched product; and
Fig. 7A and 7B show an alternative embodiment of a reveal clip as a punched product.

In the figures, identical reference numbers are used for indicating equivalent components.

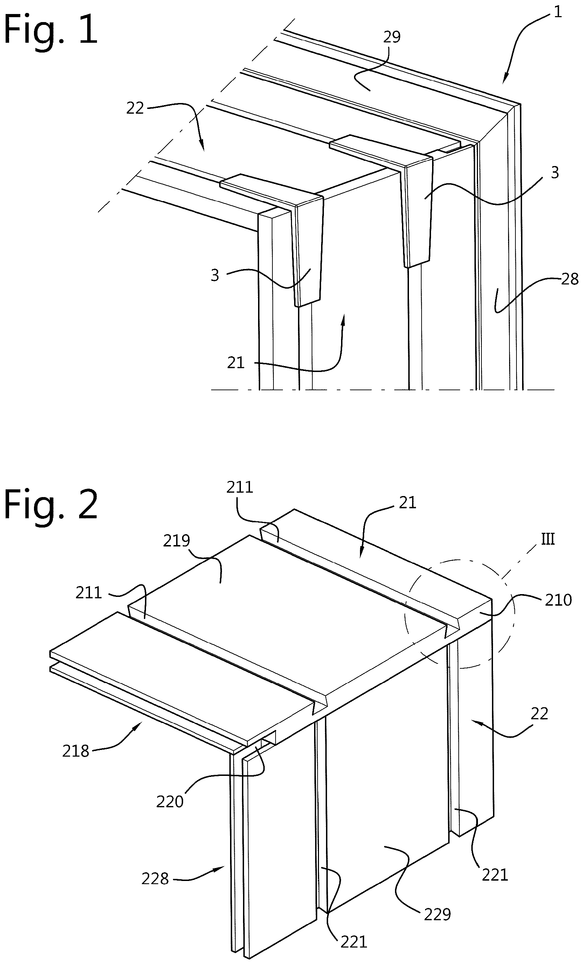

Fig. 1 shows a reveal finishing assembly 1 for finishing a reveal in a wall. The reveal, also called jamb or outer reveal, refers to an inner side of an opening in a wall. The opening may be a window or a door opening in a wall of a building. After fitting or renovating a window or door frame in the opening, the reveal needs to be finished. For finishing the reveal, wooden or plastic reveal panels may be fitted against the reveal. The reveal panels have a decorative upper side. The reveal panels cover the reveals that surround the opening in the wall and therefore provide an attractive finish.

The reveal finishing assembly 1 comprises a first and a second reveal panel 21, 22, which are joined together at right angles by means of a reveal clip 3. The reveal clip 3 is fastened against an underside of the first and second reveal panels. The first and second reveal panels are of identical configuration here. The first and second reveal panels 21, 22 are joined to a wall panel 28, 29. The wall panel 28, 29 serves for covering a portion of the wall adjacent to and around the opening. The wall panel 28, 29 may be a loose item and may be joined separately or may be integral with the reveal panel 21, 22.

Fig. 2 shows the reveal panels 21, 22 positioned at right angles to each other in more detail. Each reveal panel 21, 22 has a reveal end portion that is provided with a dovetail groove extending in a longitudinal direction 211, 221. The end face 221 of the second reveal panel 22 lies up against an upper side 218 of the first reveal panel 21. The upper side 218, 228 of each reveal panel refers to the decorative side. The underside 219, 229 of each reveal panel serves for fastening the panel against a reveal.

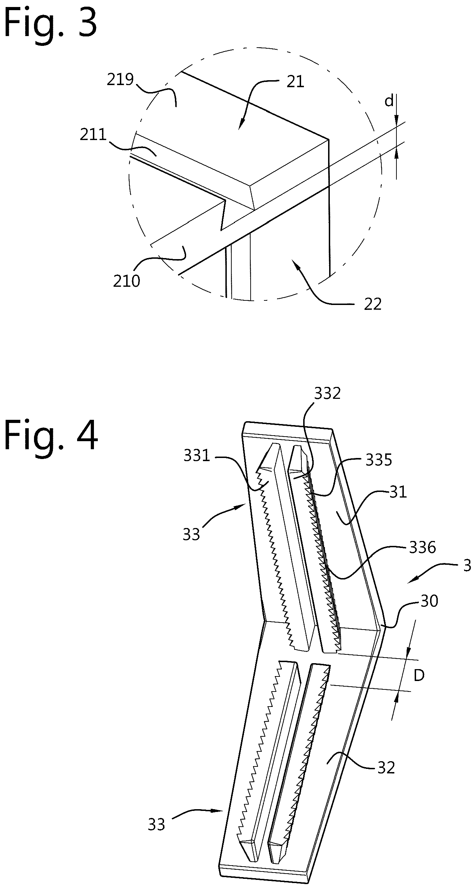

Fig. 3 shows an enlarged view of Fig. 2. The dovetail groove 211, 221 has a flat groove bottom and horizontal inward-slanting groove walls opposite each other. Here, two dovetail grooves 211, 221 extend over the whole underside 219, 229 of the reveal panels 21, 22. The portion of each dovetail groove 211, 221 in the reveal end portion is functional and serves for fastening the reveal clip 3. The dovetail groove 211, 221 has an open groove end on an end face 210, 220 of the reveal panel. The open groove end serves for receiving a clamping member 33 of the reveal clip 3, as is shown in more detail in Fig. 4. The clamping member 33 can be pushed into the dovetail groove via the open groove end.

Fig. 4 shows the reveal clip 3. Here, the reveal clip 3 is an injection moulding. The reveal clip 3 is a plastic product. The reveal clip 3 is manufactured from plastic. The reveal clip 3 has a V-shaped clip body 30 with a first clip arm 31 and a second clip arm 32 at right angle thereto. The first clip arm 31 and the second clip arm 32 together form a square internal angle of the reveal clip 3.

Each clip arm 31, 32 comprises a clamping member 33. Here, the clamping member 33 is positioned on an inner side of the reveal clip. In this way, the reveal clip is configured for fitting over an external angle of reveal panels 21, 22 positioned at right angles to each other. The clamping member 33 is configured for being pushed via the open groove end into the dovetail groove of a reveal panel. The clamping member 33 is configured for pushing the clamping member into the dovetail groove of the reveal panel. Seen in cross-section, an outer contour of the clamping member 33 corresponds to an inner contour of the dovetail groove. The outer contour of the clamping member 33 is designed according to the horizontal groove walls slanting opposite each other of the dovetail groove 211.

The design of the clamping member 33 ensures that a position of a fitted reveal panel is secured in a direction normal to the panel, so that the reveal panel does not become detached from the reveal, but also provides locking of a position in a longitudinal direction, so that the reveal panel does not slide and gaps do not develop.

The clamping member 33 on each of the clip arms 31, 32 is elongated. The clamping member extends in a longitudinal direction of the clip arm 31, 32. The clamping member comprises a first clamping part 331 that extends in the longitudinal direction of the clip arm parallel to a second clamping part 332. The first and the second clamping part 331, 332 have an outer vertical clamping-part wall 335 slanting relative to the clip arm 31, 32. The slant of the vertical clamping-part wall 335 matches an internal slant of a groove wall within the dovetail groove 211, 221. Owing to the slant of the clamping member 33, in an assembled state the reveal clip 3 is interlocked with the reveal panel 2. This interlocking blocks movement of the reveal clip 3 in a normal direction relative to the underside of the reveal panel. This counteracts a reveal panel, once fitted, becoming detached from the reveal.

The clamping-part wall 335 is provided with at least one tooth 336 that is configured for gripping on an internal wall of the dovetail groove 211, 221. The tooth 336 is oriented in such a way that a tooth gripping action of the at least one tooth is active in the longitudinal direction of the clip arm 31, 32. The tooth 336 is directed towards the right angle of the clip body. The orientation of the tooth provides a tooth gripping action that allows the clamping member 33 to be pushed into the dovetail groove of the reveal panel, but counteracts the clamping member 33 being pushed back out.

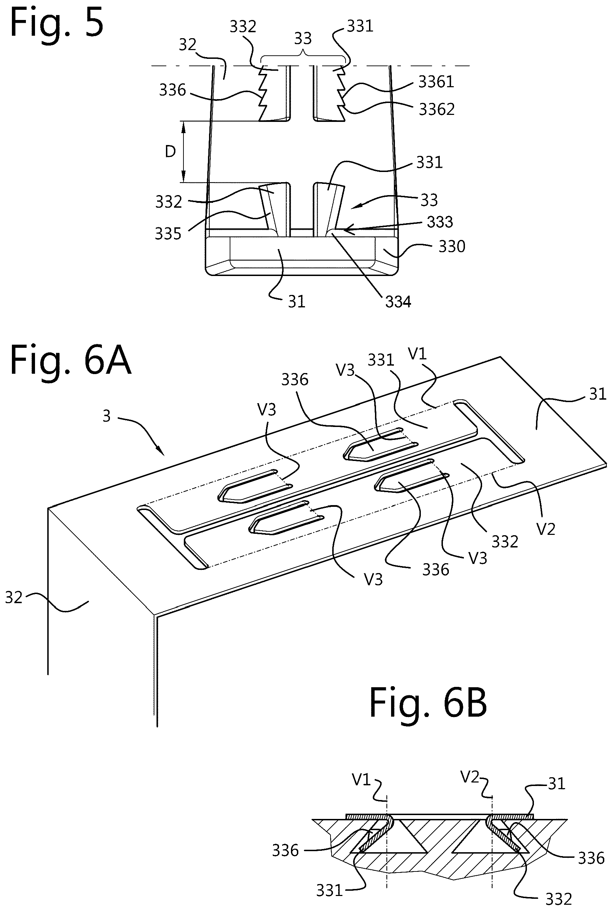

Fig. 5 shows an enlarged front view of the reveal clip 3 from Fig. 4. The clamping members shown 33 have teeth on each clip arm 31, 32, with the at least one tooth 336 that is active in the longitudinal direction of the clip arm 31, 32. The tooth 336 has a chamfer 3361 and in this case a square edge 3362. The tooth 336 has a long edge that forms the chamfer 3361 and a short edge, which in this case forms the square edge 3362. This gives the tooth 336 an orientation that is directed inwards, towards the corner of the clip body. The teeth 336 have a chamfer that allows movement of the clamping member 33 into a dovetail groove and a square edge that prevents an outward movement of the clamping member 33 out of the dovetail groove.

The orientation of the tooth gripping action is advantageous as it counteracts sliding apart of reveal panels. By using the reveal clip 3, reveal panels positioned at right angles to each other 20, 22 are joined sturdily together. This counteracts the formation of gaps between reveal panels.

Another important advantage is that reveal panels can be joined together outside the opening in the wall before the reveal panels are placed in the opening. The reveal clips 3 provide a sturdy joint between the reveal panels, so that the reveal panels do not become loose while carrying out the fitting of the reveal finishing assembly in the opening in the wall. No additional fasteners are required besides the reveal clips 3. The reveal clip 3 fixes itself by an intrinsic clamping force. A tradesman can prepare the reveal finishing assembly 1 in a workshop, after which the reveal finishing assembly is fitted in the opening in the wall. The activities for finishing a reveal in a wall in situ on the building site can be simplified and speeded up.

Fig. 5 also shows a tapering 334 at a foot 333 of the clamping member 33. The tapering 334 refers to a narrowing at the foot of the clamping member. The tapering 334 extends in the longitudinal direction of the clamping member 33. The teeth 336 are located in the region above the foot 333 of the clamping member 33. Here, the tapering 334 is without teeth. The tapering 334 is located under the teeth. At least one of the first or second clamping parts 331, 332 is provided with the tapering 334. Here, both the first clamping part 331 and the second clamping part 332 are provided with a tapering 334. Owing to the presence of this tapering 334, a predetermined clamping force of the clamping member 33 is obtained. When the clamping member 33 is pushed into an associated dovetail groove 211, 221, the predetermined clamping force provides a secure tooth gripping action in a wall of the dovetail groove. In addition, the tapering ensures that pushing-in of the clamping member is not unnecessarily difficult for a user.

Furthermore, Fig. 3 and Fig. 4 viewed together show an interspace D between the clamping member 33 of the first clip arm 31 and the clamping member 33 of the second clip arm 32. The interspace D corresponds to a remaining bottom thickness d of the reveal panel. Owing to the presence of the interspace D, the reveal panels 31, 32 can be placed and joined at right angles to one another. The clamping member 33 of the second clip arm 32 can be pushed into the dovetail groove 221 of the second reveal panel 22, after which the clamping member 33 of the first clip arm 31 is pushed into the dovetail groove 221 of the first reveal panel 21. The bottom space d fits in the interspace D.

Fig. 6A shows a plate-shaped reveal clip 3. The reveal clip 3 is a metal product here. The reveal clip 3 may for example be made of steel, especially spring steel. The reveal clip 3 has a clip body 30 with two clip arms 31, 32 oriented at right angles. The reveal clip 3 is V-shaped. The right angle of the reveal clip 3 is obtained in a bending operation. The reveal clip 3 is suitable for fitting against an external angle of reveal panels 21, 22 positioned at right angles to each other.

Each of the clip arms 31, 32 is provided with a clamping member 33. The clamping member 33 is configured for gripping on an internal wall of a dovetail groove of a reveal panel. As shown in Fig. 6B, the clamping member 33 may grip on internal walls of two adjacent dovetail grooves. The clamping member has a first and a second clamping part 331, 332. The first and the second clamping parts 331, 332 are formed by a cutting operation, such as water-jet cutting, laser processing or a punching process, from the clip body 30.

A cut is made using the cutting process. Here, the cut is H-shaped. Here, the first and the second clamping parts are shown in an initial state wherein the first and the second clamping parts still lie in the plane of a clip arm 31. The first clamping part 331 is positioned opposite the second clamping part 332. Each clamping part 331, 332 has a folding line V1, V2. In a bending operation, each clamping part is bent inwards and therefore oriented in a working state. After the bending operations, each clamping part 331, 332 is at an angle to a normal, as shown in Fig. 4. Each clamping part is thus oriented for gripping on a wall in a dovetail groove of the reveal panel.

By means of a further bending operation, at least one tooth 336 is oriented in a final state. Several teeth 336 are shown here, which together form a toothing. Each tooth 336 is obtained by a cutting operation. In the cutting operation, a tooth point is obtained that is directed towards the right angle of the reveal clip 3. By a bending operation over the folding line V3, the tooth 336 is bent out of a plane of the clamping part, so that in the working state the tooth 336 is able to grip on a side wall of a dovetail groove of a reveal panel, as shown in Fig. 6B.

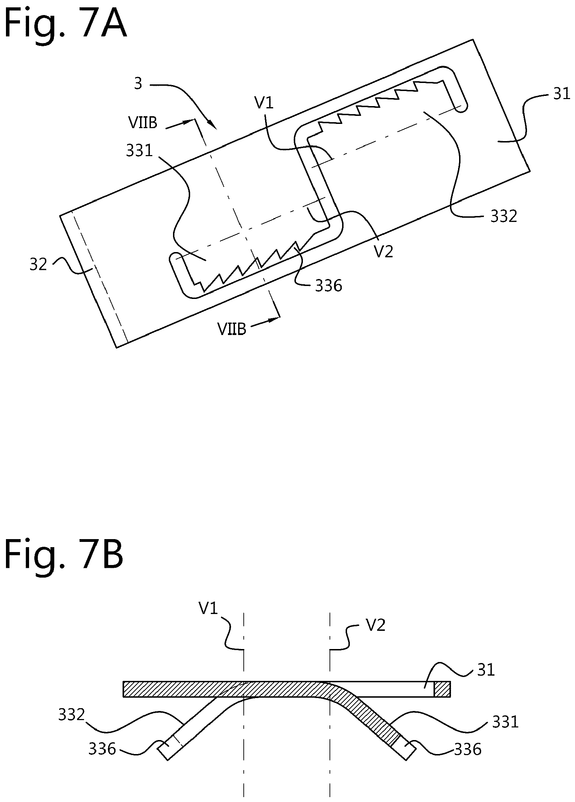

Figs. 7A and 7B show a variant of the embodiment of a plate-shaped reveal clip 3, as shown in Fig. 6. In this embodiment, the first clamping part 331 and the second clamping part 332, viewed in the longitudinal direction of the clip arm 31, are located next to each other. The first and the second clamping part 331, 332 are obtained after carrying out a cutting operation. Here, the cut is S-shaped. In one embodiment (not shown) the S-shape of the cut can be continued further, repeated in the longitudinal direction, to obtain several clamping parts per clip arm.

Advantageously, compared to Fig. 6, the folding lines V1 and V2 of each clamping part are relatively close together. In this way a reveal clip can be formed that can grip on a single dovetail groove in a reveal panel. In a bending operation over the folding line V1, V2, the first and the second clamping parts 331, 332 are oriented to correspond to an associated dovetail groove in a reveal panel, as shown in Fig. 7B. In an alternative embodiment, the first and the second clamping part can each be obtained by a U-shaped cut, wherein the first and the second clamping parts are positioned opposite each other. In a compromise with this embodiment of U's located opposite each other, the S-shaped cut-out is favourable, because with the S-shaped cut-out at a foot of a clamping part at the level of the folding line in the compromise more sheet material remains, which contributes to the strength of the first and second clamping part.

Fig. 7A also shows teeth, with the at least one tooth 336 with an orientation of a tooth point towards the corner of the clip body 30. The teeth thus allow the reveal clip 3 to be pushed into a dovetail-shaped groove, but the teeth prevent pushing-out.

In Fig. 6A, the at least one tooth 336 is provided within a contour of a clamping part. Here at least one tooth 336 is provided on an edge of at least one clamping part. The at least one tooth 336 is located on an outer contour of the clamping part. The at least one tooth 336 is thus positioned for gripping on a lower wall of the dovetail groove of the reveal panel.

### Legend:

- 1: reveal finishing assembly
- 2: reveal panel

- 21: first reveal panel
- 211: dovetail groove
- 210: end face
- 218: decorative upper side
- 219: underside, fastening side

- 22: second reveal panel
- 221: dovetail groove
- 220: end face
- 228: decorative upper side
- 229: underside, fastening side
- 28: wall panel
- 29: wall panel
- 3: reveal clip
- 30: clip body
- 31: first clip arm
- 32: second clip arm
- 33: clamping member
- 331: first clamping part
- 332: second clamping part
- 333: foot
- 334: tapering
- 335: slanting vertical clamping-part wall
- 336: tooth
- 3361: tooth chamfer
- 3362: square edge

- d: panel bottom thickness
- D: interspace
- V1, V2: clamping part folding line
- V3: tooth folding line

## Claims

1. Reveal finishing assembly (1) for finishing a reveal in a wall comprising:
- a first reveal panel (21) with a reveal end portion that is provided with a dovetail groove extending in a longitudinal direction (211), wherein the dovetail groove has an open groove end on an end face (210) of the reveal panel;
- a second reveal panel (22) with a reveal end portion that is provided with a dovetail groove extending in a longitudinal direction (221), wherein the dovetail groove has an open groove end on an end face (220) of the reveal panel;
- a reveal clip (3) for joining together the first reveal panel (21) and the second reveal panel (22) at right angles,
wherein the reveal clip has a V-shaped clip body (30) that forms a right angle with a first clip arm (31) and a second clip arm at right angles thereto (32), wherein each clip arm comprises a clamping member (33), wherein the clamping member (33) has a first clamping part (331) that extends in the longitudinal direction of the clip arm parallel to a second clamping part (332), wherein the first clamping part (331) is spaced apart at a distance from the second clamping part (332) and wherein the width of the clamping member (33) is greater than the width of the dovetail groove (211, 221), so that after fitting in the dovetail groove the clamping member is active under a spring force and generates a clamping force, wherein at least one clamping part (331, 332) has an outer vertical clamping-part wall (335) oriented slanting relative to the clip arm, wherein the clamping-part wall (335) is provided with at least one tooth (336) for gripping on a groove wall of the dovetail groove, wherein the at least one tooth (336) has a tooth point, which provides a tooth gripping action that is active in the longitudinal direction of the clip arm (31) and wherein the tooth point is directed towards the right angle of the clip body (30), so that a pushing-out of the clamping member (33) from the dovetail groove of the reveal panel is counteracted by the tooth gripping action.

2. Reveal finishing assembly according to Claim 1, wherein the reveal clip (3) is an injection moulding, wherein at least one of the first or the second clamping part (331, 332) of the clamping member (33) has a foot (333) that is provided with a tapering (334) for generating the clamping force.

3. Reveal finishing assembly according to Claim 1 or 2, wherein the tooth (336) is provided in an outer contour of the clamping-part wall (335), in particular is provided above the tapering (334).

4. Reveal finishing assembly according to Claim 1, wherein the tooth (336) is positioned on an edge of the at least one clamping part (331).

5. Reveal finishing assembly according to any of Claims 1-4, wherein the clip body (30) of the reveal clip (3) is plate-shaped and comprises a first and a second clip arm (31, 32), wherein each clamping member (33) is formed by a flanged sheet part from the first and the second clip arm (31, 32) respectively, said flanged sheet part forming a first clamping part (331) and a second clamping part (332) respectively, wherein in particular at least one of the first and the second clamping parts (331, 332) has a flanged wall part that forms the tooth (336).

6. Reveal finishing assembly according to any of the preceding claims, wherein the tooth (336) has a sawtooth shape with a tooth chamfer (3361) and in particular has a substantially square edge (3362), wherein the tooth chamfer allows pushing-in of the clamping member (33) and wherein the square edge counteracts pushing-out of the clamping member (33).

7. Reveal finishing assembly according to any of the preceding claims, wherein the slanting vertical clamping-part wall (335) is oriented slanting at an angle of at least 10° relative to a normal to the clip arm.

8. Reveal finishing assembly according to any of the preceding claims, wherein each of the first and the second clamping part (331, 332) has an outer vertical clamping-part wall (335) oriented slanting relative to the clip arm.

9. Reveal finishing assembly according to any of the preceding claims, wherein the clamping member (33) is positioned on an inner side of the clip body (30), so that the reveal clip is configured for fitting on an external angle of reveal panels positioned at right angles to each other.

10. Reveal finishing assembly according to any of the preceding claims, wherein the reveal panel comprises, on an underside, two parallel dovetail grooves (211, 221), wherein in particular the dovetail groove extends over at most a length of 30 cm, in particular at most 20 cm over an end portion of the reveal.

11. Reveal finishing assembly according to any of the preceding claims, wherein the reveal panel relates to a corner panel, wherein a reveal panel and a wall panel are integrated.

12. Reveal finishing assembly according to any of the preceding claims, wherein the reveal finishing assembly further comprises a window panel.

13. Reveal clip for forming an installed state of the reveal finishing assembly according to any of the preceding claims.

14. Method for fitting a reveal finishing assembly in an opening in a wall for finishing a reveal, wherein in one step, reveal panels are joined together by means of a reveal clip as defined in Claim 13.

15. Method according to Claim 14, wherein in a preparatory step the reveal panels are joined together into a pre-assembled reveal finishing assembly before the reveal finishing assembly is fitted in an opening in a wall.
